# EUROPÄISCHE PATENTSCHRIFT

(11) **EP 1 946 632 B1**
(45) Veröffentlichungstag und Bekanntmachung des Hinweises auf die Patenterteilung: **09.12.2009**
(21) Anmeldenummer: 08100579.5
(22) Anmeldetag: 17.01.2008
(51) Int. Cl.: A01D 43/08

(54) **Maschine zum Mähen von stängelartigem Erntegut**
Machine for mowing stalk-like crops
Machine destinée à tondre des récoltes de plantes à tiges

(30) Priorität: 18.01.2007 DE 102007002659
(43) Veröffentlichungstag der Anmeldung: 23.07.2008
(73) Patentinhaber: Maschinenfabrik Kemper GmbH & Co. KG, 48973 Stadtlohn (DE)
(72) Erfinder: Weitenberg, Klemens, 46325 Borken (DE); Schulze Hockenbeck, Leo, 48351 Everswinkel (DE); Rickert, Clemens, 49683 Ahaus (DE); Hüning, Martin, 48727 Billerbeck (DE)
(74) Vertreter: Holst, Sönke

(56) Entgegenhaltungen:
- EP-A- 0 760 200
- EP-A- 1 464 215
- EP-A- 1 862 057
- DE-U1-202005 005 700

## Beschreibung

Die Erfindung betrifft eine Maschine zum Ernten von stängelartigem Erntegut, mit einem in einer Vorwärtsrichtung über ein Feld bewegbaren Rahmen, an dem beidseits einer Längsmittelebene jeweils mindestens drei Mäh- und Einzugseinrichtungen angebracht sind, von denen die direkt der Längsmittelebene der Maschine benachbarten, ersten Mäh- und Einzugseinrichtungen im Erntebetrieb derart antreibbar sind, dass ihre in Vorwärtsrichtung der Maschine vorderen Bereiche sich nach außen bewegen und die den ersten Mäh- und Einzugseinrichtungen nach außen folgenden, zweiten Mäh- und Einzugseinrichtungen im Erntebetrieb derart antreibbar sind, dass ihre in Vorwärtsrichtung der Maschine vorderen Bereiche sich nach innen bewegen, so dass die Erntegutströme der ersten und zweiten Mäh- und Einzugseinrichtungen jeweils zwischen ihnen zusammenlaufen und rückwärtig der ersten Mäh- und Einzugseinrichtungen an einen selbstfahrenden Feldhäcksler übergebbar sind, und die den zweiten Mäh- und Einzugseinrichtungen nach außen folgenden, dritten Mäh- und Einzugseinrichtungen derart angebracht sind, dass sie das von ihnen aufgenommene Erntegut im Erntebetrieb direkt an die zweiten Mäh- und Einzugseinrichtungen übergeben.

### Stand der Technik

Maschinen eingangs genannter Art werden in der Landwirtschaft verwendet, um stängelartiges Erntegut, beispielsweise Maispflanzen, vom Boden eines Felds abzuschneiden und einem die Maschine tragenden Feldhäcksler zuzuführen, in dem die Pflanzen gehäckselt und auf einen Ladebehälter auf einem Anhänger ausgetragen werden. Derartige Maschinen weisen in der Regel eine Anzahl seitlich nebeneinander angeordneter, reihenunabhängig arbeitender Mäh- und Einzugseinrichtungen in Form von um die Hochachse rotierenden Trommeln mit um ihren Rand verteilten Ausbuchtungen, in denen die Pflanzenstängel Aufnahme finden, und unterhalb der Trommeln angebrachter Mähscheiben auf, die zum Abschneiden der Pflanzenstängel vom Erdboden dienen.

Es sind auch Ausführungsformen mit beweglichen Förderketten zum Transport der Pflanzen bekannt. Die DE 10 2005 004 004 A beschreibt eine derartige Maschine, die insgesamt vier Kettenförderer aufweist, die das Erntegut an ihren Vorderseiten zur Mitte der Maschine fördern, an der es nach hinten umgelenkt und in den Einzugskanal eines die Maschine tragenden und über ein Feld bewegenden Feldhäckslers gefördert wird.

Die DE 20 2005 005 700 U1 beschreibt eine Maschine eingangs genannter Art. Die der Längsmittelebene benachbarten, ersten Mäh- und Einzugseinrichtungen rotieren mit ihren Vorderseiten nach außen. Die nach außen folgenden, zweiten Mäh- und Einzugseinrichtungen rotieren dazu gegensinnig. Die ersten Mäh- und Einzugseinrichtungen transportieren in ihren rückwärtigen Bereichen alle von ihrer Hälfte der Maschine aufgenommenen Pflanzen nach hinten und übergeben sie in einen Einzugskanal eines Feldhäckslers. Die wiederum nach außen folgenden, dritten Mäh- und Einzugseinrichtungen drehen sich gleichsinnig mit den zweiten Mäh- und Einzugseinrichtungen. Die von den dritten Mäh- und Einzugseinrichtungen aufgenommenen Pflanzen werden direkt, d. h. ohne zusätzliche aktive Fördermittel, an die zweiten Mäh- und Einzugseinrichtungen übergeben.

In der DE 32 26 876 A wird eine andere Maschine zur Ernte stängelartiger Pflanzen beschrieben. In einer Ausführungsform sind vier Mäh- und Einzugseinrichtungen vorgesehen, von denen die der Längsmittelebene der Maschine benachbarten, ersten Mäh- und Einzugseinrichtungen derart angetrieben werden, dass sie sich mit ihren Vorderseiten zur Mitte der Maschine hin drehen und dann das Erntegut nach hinten an den Einzugskanal des Feldhäckslers abgeben. Die zweiten, äußeren Mäh- und Einzugseinrichtungen drehen sich gegensinnig zu den ersten Mäh- und Einzugseinrichtungen und fördern ihr Erntegut zunächst an ihrer Rückseite entlang, bevor sie es an die ersten Mäh- und Einzugseinrichtungen übergeben.

### Aufgabenstellung

Als nachteilig wird bei der Maschine nach DE 20 2005 005 700 U1 angesehen, dass die Pflanzen im Übergangsbereich zu den zweiten Mäh- und Einzugseinrichtungen einer abrupten Richtungs- und Geschwindigkeitsänderung ausgesetzt sind, da sie sich zuerst mit der dritten Mäh- und Einzugseinrichtung nach hinten und dann mit der zweiten Mäh- und Einzugseinrichtung nach vorn bewegen. Das führt zu Übergabeproblemen, die die zitierte Schrift durch aufwändige Umlenk- und Führungselemente zu bewältigen versucht, die funktional die Übergabe des Ernteguts unterstützen sollen.

Da in der DE 32 26 876 A gelehrt wird, das geschnittene Erntegut gleichsinnig von vorn den Einschubwalzen zuzuführen, würde der Fachmann bei einer Erweiterung der Maschine aus DE 32 26 876 A auf eine höhere Anzahl von Mäh- und Einzugseinrichtungen die Drehrichtungen der vier dort beschriebenen Mäh- und Einzugseinrichtungen beibehalten und außen jeweils eine dritte Mäh- und Einzugseinrichtung hinzufügen, die sich wiederum gegensinnig zu der zweiten Mäh- und Einzugseinrichtung dreht. Das hätte den Nachteil, dass die erste (der Längsmittelebene der Maschine unmittelbar benachbarte) Mäh- und Einzugseinrichtung den gesamten Erntegutstrom der zugehörigen Maschinenhälfte an ihrer Vorderseite zu bewältigen hätte, was sich als problematisch erweist.

Die der Erfindung zu Grunde liegende Aufgabe wird darin gesehen, eine Maschine zum Mähen von stängelartigem Erntegut mit größerer Arbeitsbreite zu schaffen, die sich durch einen einfachen Aufbau und eine sichere Förderung des Ernteguts auszeichnet.

### Lösung der Aufgabe

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Maschine umfasst einen Rahmen, der sich in einer Vorwärtsrichtung über ein Feld bewegen lässt, wozu er an einen selbstfahrenden Feldhäcksler montiert werden kann. Der Rahmen stützt mindestens sechs Mäh- und Einzugseinrichtungen ab, von denen jeweils drei auf einer Seite der Längsmittelebene der zur Längsmittelebene symmetrischen Maschine angeordnet sind. Die der Längsmittelebene benachbarten, ersten Mäh- und Einzugseinrichtungen werden im Erntebetrieb derart angetrieben, dass sich ihre Vorderseiten nach außen bewegen, während sich die nach außen folgenden, zweiten Mäh- und Einzugseinrichtungen im Erntebetrieb gegensinnig dazu bewegen. Die Erntegutströme von den ersten Mäh- und Einzugseinrichtungen und zweiten Mäh- und Einzugseinrichtungen laufen im Bereich zwischen ihnen zusammen und werden rückwärtig der ersten Mäh- und Einzugseinrichtungen an den Einzugskanal eines Feldhäckslers übergeben. Dazu können die Erntegutströme durch die Rückseiten der ersten Mäh- und Einzugseinrichtungen und/oder separate Abgabeförderer aktiv gefördert werden. Die den zweiten Mäh- und Einzugseinrichtungen nach außen folgenden, dritten Mäh- und Einzugseinrichtungen bewegen sich im Erntebetrieb gleichsinnig mit den ersten Mäh- und Einzugseinrichtungen und bewegen sich deshalb mit ihren in Vorwärtsrichtung der Maschine vorderen Bereichen nach außen. Die Pflanzen werden dann nach hinten und innen, in Richtung auf die Längsmittelebene der Maschine gefördert und im Zwickelbereich zu den zweiten Mäh- und Einzugseinrichtungen an diese übergeben, ohne Zwischenschaltung aktiver Förderer.

Auf diese Weise erhält man eine Maschine zur Ernte von stängelartigem Erntegut, die bei relativ großen Arbeitsbreiten einen optimalen Gutfluss ohne abrupte Richtungsänderungen ermöglicht. Sollte noch eine vierte (fünfte) Mäh- und Einzugseinrichtung hinzugefügt werden, würde sie sich gleichsinnig mit der zweiten (ersten) Mäh- und Einzugseinrichtung drehen.

In einer bevorzugten Ausführungsform umfassen die ersten, zweiten und dritten Mäh- und Einzugseinrichtungen in an sich bekannter Weise jeweils untere Schneidscheiben zum Abschneiden der Pflanzenstängel vom im Boden verbleibenden Stümpfen und koaxial darüber angeordnete, drehbare Förderscheiben mit um ihren Umfang verteilten Aussparungen zur Aufnahme von Pflanzenstängeln. Es wäre aber auch denkbar, Mäh- und Einzugseinrichtungen mit beweglichen Förderketten zum Transport der Pflanzen zu verwenden.

In einer möglichen Ausführungsform haben die ersten und zweiten Mäh- und Einzugseinrichtungen einen größeren Durchmesser (z. B. 1,5 m zur Ernte von zwei im Abstand von 0,75 m angebauten Reihen) als die dritten Mäh- und Einzugseinrichtungen (z. B. 0,75 m zur Ernte von einer im Abstand von 0,75 m angebauten Reihe). Die Drehachsen der Mäh- und Einzugseinrichtungen können auf einer Linie liegen. Es wäre aber auch denkbar, dass alle Mäh- und Einzugseinrichtungen der Maschine denselben Durchmesser aufweisen, der insbesondere 1,5 m oder 0,75 m betragen kann.

Den dritten Mäh- und Einzugseinrichtungen, die den äußeren Rand der Maschine bilden, können als Blattheber äußere Stängelheberschnecken zugeordnet werden. Die nach hinten gerichtete Förderrichtung der Stängelheberschnecke entspricht der Förderrichtung der ihr benachbarten, dritten Mäh- und Einzugseinrichtung, was die Förderwirkung verbessert.

Alternativ sind ihnen starr mit dem Rahmen verbundene äußere Teilerspitzen benachbart. Am rückwärtigen Bereich der dritten Mäh- und Einzugseinrichtungen können auch Querfördertrommeln angeordnet werden, die insbesondere mit Mitnehmern ausgestattet sind, welche sich durch Schlitze in einer rückwärtigen Wand des Rahmens erstrecken.

### Ausführungsbeispiel

In den Zeichnungen sind drei nachfolgend näher beschriebene Ausführungsbeispiele der Erfindung dargestellt. Es zeigt:
Figur 1 eine Draufsicht auf eine erste Ausführungsform einer erfindungsgemäßen Maschine zum Ernten von stängelartigem Erntegut,
Figur 2 eine Draufsicht auf eine zweite Ausführungsform einer erfindungsgemäßen Maschine zum Ernten von stängelartigem Erntegut, und

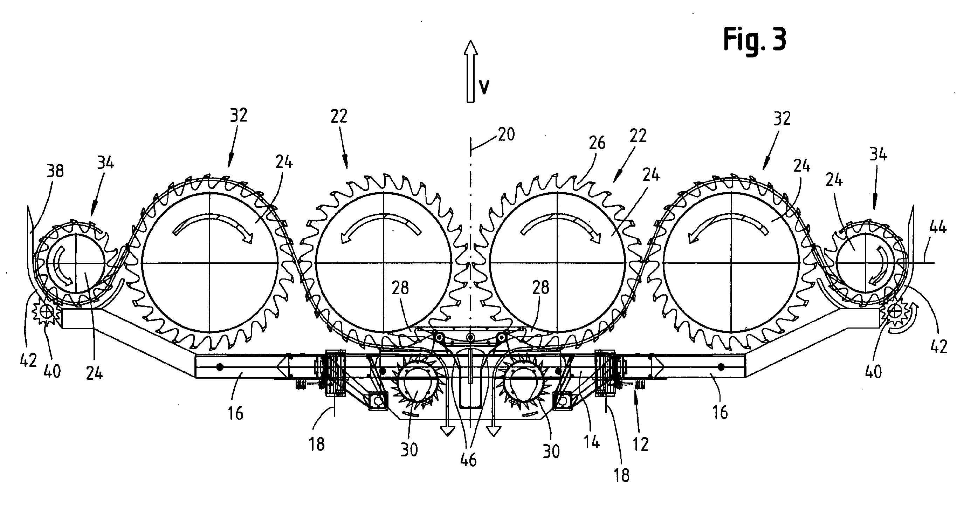

Figur 3 eine Draufsicht auf eine dritte Ausführungsform einer erfindungsgemäßen Maschine zum Ernten von stängelartigem Erntegut.

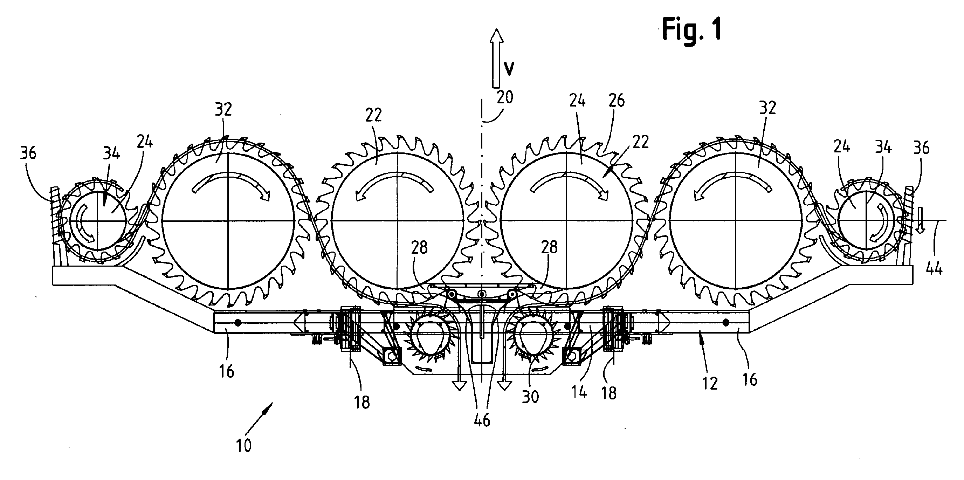

In der Figur 1 ist eine Maschine 10 zum Ernten von stängelartigem Erntegut, insbesondere Mais, in einer schematischen Draufsicht dargestellt. Die Maschine 10 wird an einem mit Vorpresswalzen ausgestatteten Einzugskanal eines selbstfahrenden Feldhäckslers, der in der Figur 1 nicht eingezeichnet ist, befestigt und wird von ihm in einer Fahrtrichtung V über ein abzuerntendes Feld bewegt. Im Folgenden beziehen sich Richtungsangaben, wie vorn und hinten, auf die Vorwärtsrichtung V.

Die Maschine 10 umfasst einen Rahmen 12 mit einem am Einzugskanal abgestützten mittleren Querträger 14, an dem äußere Querträger 16 um horizontale, sich in Vorwärtsrichtung erstreckende Schwenkachsen 18 hochschwenkbar angelenkt sind, um die Maschine 10 zur Straßenfahrt in eine eingefaltete Transportposition verbringen zu können, in der die äußeren Querträger 16 durch nicht eingezeichnete Aktoren um etwa 90° nach oben verschenkt sind.

Die Maschine 10 ist zu einer Längsmittelebene 20 symmetrisch ausgebildet. Unmittelbar der Längsmittelebene 20 sind zwei erste Mäh- und Einzugseinrichtungen 22 benachbart, die in an sich bekannter Weise eine drehbare, untere Schneidscheibe (nicht gezeigt) und koaxial darüber angeordnete, drehbare Förderscheiben 24 mit um ihren Umfang verteilten Aussparungen 26 zur Aufnahme von Pflanzenstängeln umfassen. Die Mäh- und Einzugseinrichtungen 22 sind durch zugeordnete Getriebe (nicht gezeigt) am mittleren Querträger 14 abgestützt und werden durch einen geeigneten Antriebsstrang (nicht gezeigt) vom Feldhäcksler her angetrieben. Im Erntebetrieb drehen sich die Förderscheiben 24 der ersten Mäh- und Einzugseinrichtungen 22 in den durch die Pfeile angedeuteten Richtungen, d.h. mit ihren vorderen Bereichen nach außen. An den rückwärtigen Bereichen der ersten Mäh- und Einzugseinrichtungen 22 sind Abstreifer 28 angeordnet, die die Pflanzenstängel aus den Aussparungen 26 herausheben. Rückwärtig der ersten Mäh- und Einzugseinrichtungen 22 angebrachte Abgabefördertrommeln 30 mit senkrechten oder leicht nach vorn geneigten Drehachsen übernehmen die Pflanzen und fördern sie nach hinten in den Einzugskanal, wobei sie durch mittlere Führungswände 46 unterstützt werden, die sich an die Abstreifer 28 anschließen.

In seitlicher Richtung folgen den ersten Mäh- und Einzugseinrichtungen 22 zweite Mäh- und Einzugseinrichtungen 32, die mit den ersten Mäh- und Einzugseinrichtungen 22 im Aufbau identisch sind, deren Förderscheiben 24 jedoch gegensinnig zu den Förderscheiben 24 der ersten Mäh- und Einzugseinrichtungen 22 drehen und durch die sie antreibenden Getriebe (nicht gezeigt) am äußeren Querträger 16 abgestützt sind. Durch geeignete Abstreifer (nicht gezeigt) wird erreicht, dass die zweiten Mäh- und Einzugseinrichtungen 32 die von ihnen geförderten Pflanzen im Zwickelbereich zu den ersten Mäh- und Einzugseinrichtungen 22 an diese übergeben.

In seitlicher Richtung folgen den zweiten Mäh- und Einzugseinrichtungen 32 dritte Mäh- und Einzugseinrichtungen 34. Sie sind durch sie antreibende Getriebe (nicht gezeigt) am äußeren Querträger 16 abgestützt, weisen mit einem Durchmesser von ca. 0,75 m etwa den halben Durchmesser der ersten und zweiten Mäh- und Einzugseinrichtungen 22, 32 auf, der etwa 1,5 m beträgt, und ihre Förderscheiben 24 drehen sich im Erntebetrieb gegensinnig zu den zweiten Mäh- und Einzugseinrichtungen 34, d. h. sie drehen sich mit ihren Vorderseiten zunächst nach außen und fördern die Pflanzen dann an ihren Rückseiten entlang, bis sie im Zwickelbereich zu den zweiten Mäh- und Einzugseinrichtungen 32 durch geeignete Abstreifer (nicht gezeigt) aus den Aussparungen der Förderscheiben 24 der dritten Mäh- und Einzugseinrichtungen 34 herausgehoben und direkt, ohne zwischengeschaltete aktive Fördermittel, an die zweiten Mäh- und Einzugseinrichtungen 32 übergeben werden, die sie dann an ihren Vorderseiten mitführen und an die ersten Mäh- und Einzugseinrichtungen 22 übergeben. Die Drehachsen aller Mäh- und Einzugseinrichtungen 22, 32, liegen auf einer sich quer zur Vorwärtsrichtung V und zur parallel dazu verlaufenden Längsmittelebene 20 erstreckenden Linie 44. Der Mittelpunkt der dritten Mäh- und Einzugseinrichtungen 34 kann auch weiter vorn liegen als der der ersten und zweiten Mäh- und Einzugseinrichtungen 22, 32. Ein Vorteil dabei wäre eine Verkürzung des Weges für das Erntegut.

An den Außenseiten der Maschine 10, den dritten Mäh- und Einzugseinrichtungen 34 nach außen unmittelbar benachbart, sind in der Ausführungsform nach Figur 1 Stängelheberschnecken 36 angebracht, um ggf. Lagermais aufnehmen zu können. Die Stängelheberschnecken 36 fördern die Pflanzen nach hinten und werden dabei durch die benachbarten Bereiche der dritten Mäh- und Einzugseinrichtungen unterstützt.

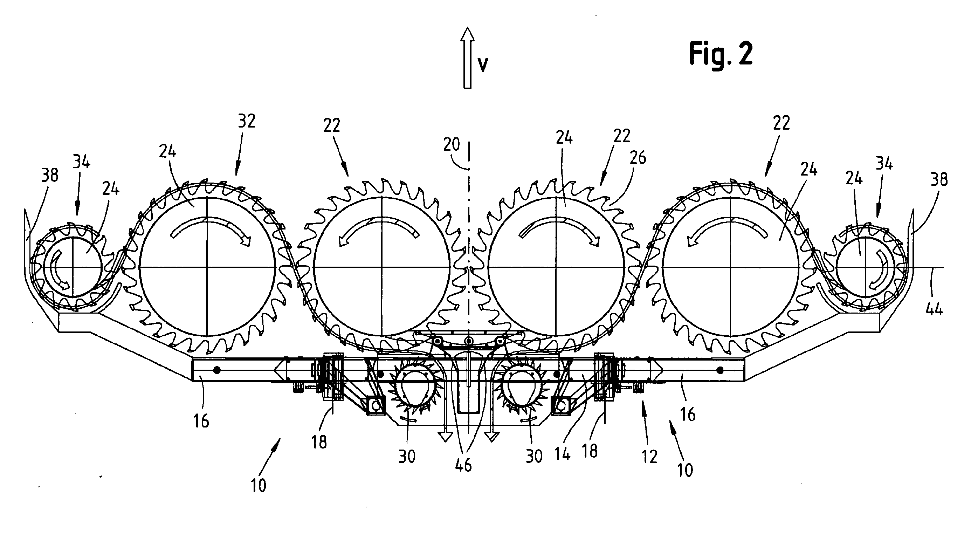

Bei der Ausführungsform nach Figur 2 sind anstelle der Stängelheberschnecken 36 starr mit dem äußeren Querträger 16 des Rahmens 12 verbundene Teilerspitzen 38 vorgesehen.

Schließlich sind an der Rückwand des äußeren Querträgers 16 des Rahmens 12 Querfördertrommeln 40 angeordnet, die in Richtung des Pfeils angetrieben werden und Mitnehmer umfassen, die sich durch in einer rückwärtigen Wand 42 des Rahmens 12, angebrachte Schlitze erstrecken. Die Wand 42 befindet sich oberhalb des äußeren Querträgers 16 rückwärtig der dritten Mäh- und Einzugseinrichtung 34 und an sie schließt sich die Teilerspitze 38 nach vorn an.

Nach alledem ergibt sich die Funktion der Maschine 10 derart, dass die Maschine 10 durch einen Feldhäcksler in Vorwärtsrichtung V über ein Feld bewegt wird und die Mäh- und Einzugseinrichtungen 22, 32, 34, die Abgabefördertrommeln 30 und ggf. die Stängelheberschnecken 36 und die Querfördertrommeln 40 durch den Feldhäcksler angetrieben werden. Die dritten Mäh- und Einzugseinrichtungen 34 nehmen auf dem Feld vor ihnen stehende Pflanzen auf, fördern sie nach außen und dann an ihren Rückseiten nach innen, bis sie im Zwickelbereich an die zweiten Mäh- und Einzugseinrichtungen 32 übergeben werden. Diese fördern sie, gemeinsam mit den von den zweiten Mäh- und Einzugseinrichtungen 32 selbst aufgenommenen Pflanzen, an ihren Vorderseiten entlang, bis sie sie an die ersten Mäh- und Einzugseinrichtungen 22 übergeben. Letztere fördern die übernommenen Pflanzen, gemeinsam mit den von den ersten Mäh- und Einzugseinrichtungen 22 an ihren Vorderseiten selbst aufgenommenen Pflanzen, an ihren Rückseiten bis zu den Abgabefördertrommeln 30, die alle Pflanzen dann nach hinten in den Einzugskanal abgeben. Man erhält demnach einen Erntegutfluss ohne abrupte Richtungsänderungen. Da sich jeweils benachbarte Mäh- und Einzugseinrichtungen 22, 32, 34 gegensinnig drehen und so in ihrer Förderwirkung auf den Gutstrom gegenseitig unterstützen, entsteht ein relativ weicher Gutstrom, der abrupte Umlenkungen vermeidet.

## Patentansprüche

1. Maschine (10) zum Ernten von stängelartigem Erntegut, mit einem in einer Vorwärtsrichtung (V) über ein Feld bewegbaren Rahmen (12), an dem beidseits einer Längsmittelebene (20) jeweils mindestens drei Mäh- und Einzugseinrichtungen (22, 32, 34) angebracht sind, von denen die direkt der Längsmittelebene (20) der Maschine benachbarten, ersten Mäh- und Einzugseinrichtungen (20) im Emtebetrieb derart antreibbar sind, dass ihre in Vorwärtsrichtung (V) der Maschine (10) vorderen Bereiche sich nach außen bewegen und die den ersten Mäh- und Einzugseinrichtungen (22) nach außen folgenden, zweiten Mäh- und Einzugseinrichtungen (32) im Erntebetrieb derart antreibbar sind, dass ihre in Vorwärtsrichtung (V) der Maschine (10) vorderen Bereiche sich nach innen bewegen, so dass die Erntegutströme der ersten und zweiten Mäh- und Einzugseinrichtungen (22, 32) jeweils zwischen ihnen zusammenlaufen und rückwärtig der ersten Mäh- und Einzugseinrichtungen (22) an einen selbstfahrenden Feldhäcksler übergebbar sind, und die den zweiten Mäh- und Einzugseinrichtungen (32) nach außen folgenden, dritten Mäh- und Einzugseinrichtungen (34) derart angebracht sind, dass sie das von ihnen aufgenommene Erntegut im Emtebetrieb direkt an die zweiten Mäh- und Einzugseinrichtungen (32) übergeben, **dadurch gekennzeichnet, dass** die dritten Mäh- und Einzugseinrichtungen (34) im Emtebetrieb derart antreibbar sind, dass ihre in Vorwärtsrichtung (V) der Maschine (10) vorderen Bereiche sich nach außen bewegen.

2. Maschine (10) nach Anspruch 1, **dadurch gekennzeichnet, dass** die ersten, zweiten und dritten Mäh- und Einzugseinrichtungen (22,32, 34) eine drehbare, untere Schneidscheibe und koaxial darüber angeordnete, drehbare Förderscheiben (24) mit um ihren Umfang verteilten Aussparungen (26) zur Aufnahme von Pflanzenstängeln umfassen.

3. Maschine (10) nach Anspruch 1 oder 2, **dadurch gekennzeichnet, dass** die ersten und zweiten Mäh- und Einzugseinrichtungen (22, 32) einen größeren Durchmesser als die dritten Mäh- und Einzugseinrichtungen (34) aufweisen.

4. Maschine (10) nach Anspruch 2 oder 3, **dadurch gekennzeichnet, dass** die Drehachsen aller Mäh- und Einzugseinrichtungen (22, 32, 34) auf einer Linie (44) liegen.

5. Maschine (10) nach einem der vorhergehenden Ansprüche, **dadurch gekennzeichnet, dass** einer oder beiden dritten Mäh- und Einzugseinrichtung(en) (34) seitlich benachbarte, äußere Stängelheberschnecken (36) zugeordnet sind, die eine nach hinten gerichtete Förderrichtung aufweisen.

6. Maschine (10) nach einem der Ansprüche 1 bis 4, **dadurch gekennzeichnet, dass** einer oder beiden dritten Mäh- und Einzugseinrichtung(en) (34) eine benachbarte, fest mit dem Rahmen (12) verbundene äußere Teilerspitze (38) ohne bewegliche Elemente zugeordnet ist.

7. Maschine (10) nach einem der Ansprüche 1 bis 4, **dadurch gekennzeichnet, dass** einer oder beiden dritten Mäh- und Einzugseinrichtung(en) eine benachbarte, fest mit dem Rahmen verbundene äußere Teilerspitze (38) zugeordnet ist, und dass dem rückwärtigen Bereich der dritten Mäh- und Einzugseinrichtung (34) eine Querfördertrommel (40) zugeordnet ist.

8. Maschine nach Anspruch 7, **dadurch gekennzeichnet, dass** die Querfördertrommel (40) Mitnehmer umfasst, die sich durch in einer rückwärtigen Wand (42) des Rahmens (12) angebrachte Schlitze erstrecken.

## Claims

1. A machine (10) for the harvest of stalk-like harvested crop, with a frame (12) that can be moved across a field in a forward operating direction (V), to which on both sides of a longitudinal center plane (20) at least three mowing and intake arrangements (22, 32, 34) are attached, of which the first mowing and intake arrangements (22) that are directly adjacent to the longitudinal center plane (20) of the machine (10) can be driven during the harvesting operation in such a way that their forward regions, as seen in the forward operating direction (V) of the machine (10), move towards the outside and that the second mowing and intake arrangements (32), which follow the first mowing and intake arrangements (22) to the outside, can be driven during the harvesting operation in such a way that their forward regions as seen in the forward operating direction (V) of the machine (10) move inward, so that the flows of harvested crop of the first and second mowing and intake arrangements (22, 32) respectively converge between them and can be delivered to a self-propelled forage harvester at the rear of the first mowing and intake arrangements (22) and the third mowing and intake arrangement (34), which follows the second mowing and intake arrangement (32) to the outside, are attached in such a way that they deliver the harvested crop taken up by them during the harvesting operation directly to the second mowing and intake arrangement (32), **characterized in that** the third mowing and intake arrangements (34) can be driven during the harvesting operation in such a way that their forward regions, as seen in the forward operating direction (V) of the machine (10) move towards the outside.

2. A machine (10) according to claim 1, **characterized in that** the first, second and third mowing and intake arrangements (22, 32, 34) include a rotating lower cutting disk and rotating conveyor disks (24) arranged coaxially above them with recesses (26) distributed about their circumferences to accept stalks of plants.

3. A machine (10) according to claim 1 or 2, **characterized in that** the first and second mowing and intake arrangements (22, 32) are provided with a larger diameter than the third mowing and intake arrangements (34).

4. A machine (10) according to claim 2 or 3, **characterized in that** the axes of rotation of all mowing and intake arrangements (22, 32, 34) lie along a line (44).

5. A machine (10) according to one of the preceding claims, **characterized in that** outer stalk lifting augers (36) are assigned laterally adjacent to one or both third mowing and intake arrangements (34), the outer stalk lifting augers (36) are provided with a conveying direction towards the rear.

6. A machine (10) according to one of the claims 1 through 4, **characterized in that** an adjoining lower divider point (38) without any moving elements is rigidly connected to the frame (12) and is associated with one or both third mowing and intake arrangements (34).

7. A machine (10) according to one of the claims 1 through 4, **characterized in that** an adjoining outer divider point (38) is rigidly connected to the frame and associated with one or both third mowing and intake arrangements (34) and that a transverse conveyor drum (40) is associated with the rear region of the third mowing and intake arrangement (34).

8. A machine (10) according to claim 7, **characterized in that** the transverse conveyor drum (40) includes drivers which extend through slots provided in a rear wall (42) of the frame (12).

## Revendications

1. Machine (10) pour récolter des récoltes de plantes à tiges, comprenant un cadre (12) déplaçable dans une direction d'avance (V) sur un champ, sur lequel sont montés de part et d'autre d'un plan médian longitudinal (20) à chaque fois au moins trois dispositifs de tonte et d'amenée (22, 32, 34), dont les premiers dispositifs de tonte et d'amenée (20) directement adjacents au plan médian longitudinal (20) de la machine peuvent être entraînés en mode de récolte de telle sorte que leurs parties avant dans la direction d'avance (V) de la machine (10) se déplacent vers l'extérieur et dont les deuxièmes dispositifs de tonte et d'amenée (32) suivant les premiers dispositifs de tonte et d'amenée (22) vers l'extérieur peuvent être entraînés en mode de récolte de telle sorte que leurs parties avant dans la direction d'avance (V) de la machine (10) se déplacent vers l'intérieur, de sorte que les flux de récoltes des premiers et deuxièmes dispositifs de tonte et d'amenée (22, 32) convergent à chaque fois les uns vers les autres et puissent être transférés vers l'arrière des premiers dispositifs de tonte et d'amenée (22) à une faucheuse-hacheuse automotrice, et dont les troisièmes dispositifs de tonte et d'amenée (34) suivant vers l'extérieur les deuxièmes dispositifs de tonte et d'amenée (32) sont montés de telle sorte qu'ils transfèrent directement aux deuxièmes dispositifs de tonte et d'amenée (32) en mode de récolte les récoltes qu'ils reçoivent, **caractérisée en ce que** les troisièmes dispositifs de tonte et d'amenée (34) peuvent être entraînés en mode de récolte de telle sorte que leurs parties avant dans la direction d'avance (V) de la machine (10) se déplacent vers l'extérieur.

2. Machine (10) selon la revendication 1, **caractérisée en ce que** les premiers, deuxièmes et troisièmes dispositifs de tonte et d'amenée (22, 32, 34) comprennent un disque de coupe inférieur rotatif et des disques de transport rotatif (24) disposés coaxialement par-dessus celui-ci, avec des évidements (26) répartis sur leur périphérie pour recevoir les tiges de plantes.

3. Machine (10) selon la revendication 1 ou 2, **caractérisée en ce que** les premiers et deuxièmes dispositifs de tonte et d'amenée (22, 32) présentent un plus grand diamètre que les troisièmes dispositifs de tonte et d'amenée (34).

4. Machine (10) selon la revendication 2 ou 3, **caractérisée en ce que** les axes de rotation de tous les dispositifs de tonte et d'amenée (22, 32, 34) se situent sur une ligne (44).

5. Machine (10) selon l'une quelconque des revendications précédentes, **caractérisée en ce que** des hélices extérieures, latéralement adjacentes, de levage des tiges (36), sont associées à un ou aux deux troisièmes dispositifs de tonte et d'amenée (34), et présentent une direction de transport orientée vers l'arrière.

6. Machine (10) selon l'une quelconque des revendications 1 à 4, **caractérisée en ce qu'**un ou les deux troisièmes dispositifs de tonte et d'amenée (34) sont associés à un diviseur (38) extérieur adjacent, connecté fixement au cadre (12) sans éléments mobiles.

7. Machine (10) selon l'une quelconque des revendications 1 à 4, **caractérisée en ce qu'**un ou les deux troisièmes dispositifs de tonte et d'amenée sont associés à un diviseur (38) extérieur adjacent connecté fixement au cadre, et **en ce qu'**un tambour de transport transversal (40) est associé à la partie arrière du troisième dispositif de tonte et d'amenée (34).

8. Machine selon la revendication 7, **caractérisée en ce que** le tambour de transport transversal (40) comprend des dispositifs d'entraînement qui s'étendent à travers des fentes montées dans une paroi arrière (42) du cadre (12).
